(19) Europäisches Patentamt
European Patent Office
Office européen des brevets

(11) Publication number: **0 212 319 B1**

(12) # EUROPEAN PATENT SPECIFICATION

(45) Date of publication of patent specification: **06.05.92**

(51) Int. Cl.5: **C08G 65/00**, C08G 59/02, C08G 18/50, C08G 18/58, C09D 175/04, C09J 175/04, G11B 5/72

(21) Application number: **86110195.4**

(22) Date of filing: **24.07.86**

The file contains technical information submitted after the application was filed and not included in this specification

(54) **Resins prepared from fluorinated polymers.**

(30) Priority: **24.07.85 IT 2170385**

(43) Date of publication of application:
**04.03.87 Bulletin 87/10**

(45) Publication of the grant of the patent:
**06.05.92 Bulletin 92/19**

(84) Designated Contracting States:
**AT BE DE FR GB NL SE**

(56) References cited:
**WO-A-81/02738**
**US-A- 3 852 222**
**US-A- 3 872 045**
**US-A- 4 085 137**

(73) Proprietor: **AUSIMONT S.p.A.**
**Foro Buonaparte, 31**
**I-20121 Milano(IT)**

(72) Inventor: **Re, Alberto**
**40, via Lamarmora**
**I-20122 Milan(IT)**
Inventor: **Terenghi, Tiziano**
**9, via Verdi**
**I-20055 Renate Milan(IT)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

EP 0 212 319 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to resins prepared from polyisocyanates and fluorinated polymers, the latter being derived from epichlorohydrin and from one or more diols of which at least one is a perfluoropolyoxyalkylene diol.

There are known crosslinked fluorinated resins of the epoxy and urethane type which are prepared starting from epichlorohydrin, a fluorinated bisphenol and a fluoroalkane diol (US-A-3,852,222 and 3,872,045). Similar resins, in which the fluoroalkanediol is substituted by the cis or trans isomer of formula:

$$HO(CF_3)_2CCH_2CH = CHC(CF_3)_2OH$$

which is less expensive are known as well (US-A-4,132,681). Such crosslinked resins, however, have a very high glass transition temperature (Tg) and hardness characteristics which limit the use thereof to specific applications.

Polyepoxides which are crosslinkable with amines are also known and described in US-A-3,810,874 and 4,085,137. However, once such polymers are crosslinked, they no longer possess a satisfactory combination of mechanical characteristics such as hardness, tensile strength, modulus of elasticity and elongation.

Therefore, the polymers of the prior art are not suited for particular applications such as, for example, printed circuits in which the coating polymer should be highly resistant to heat or to solvents, have a high chemical stability and good mechanical properties, even at very low temperatures.

There was, thus, a great demand for producing highly crosslinked resins of the urethane or epoxy type which exhibit improved mechanical characteristics and, above all, offer advantages as regards their utility over analogous products already known.

There was also a need for resins with bonds of the urethane type which behave like fluorinated rubbers but with mechanical properties that are improved compared with analogous known products.

It was also important to make available resins which, compared with those of the prior art, show improved stability to heat, oxidation, water, solvents and to atmospherical agents, have a low surface energy, are not degraded by UV-radiation and exhibit a low wettability, low refraction index, low Tg, high thermal coefficient and low dielectric constant.

Furthermore, there was a demand for a wide range of resins which can be employed in several different fields of use and which could be obtained by starting from a sole polymeric precursor by a method adaptable to the various requirements.

It has now, surprisingly, been found that the polymers of the following general formula (I), after reaction with polyisocyanates, are capable of providing resins containing bonds of the urethane type which have excellent mechanical characteristics within a surprisingly broad temperature range (-120 °C to +300 °C).

Thus, an object of the present invention are the reaction products of polyisocyanates and the fluorinated polymers of general formula (I).

A further object of the invention are fluorinated resins endowed with exceptional mechanical properties and a high stability to sunlight, heat and chemical and atmospherical agents in a surprisingly wide range of temperatures (-120 °C to +300 °C) which can be used as adhesives, structural materials, paints, coatings etc.

Still another object of the invention are fluorinated rubbers with bonds of the urethane type, endowed with excellent mechanical properties and a Tg lower than -80 °C.

The fluorinated polymers which constitute one portion of the resins according to the invention have the general formula (I):

$$B-(OAO-CH_2-\underset{\displaystyle OH}{\underset{|}{CH}}-CH_2)_x-(O-CH_2-R_f-CH_2-\underset{\displaystyle OH}{\underset{|}{CH}}-CH_2)_y-ODO-B' \qquad (I)$$

wherein:

x = an integer of up to 20, but not zero;
y = an integer of from 1 to 20;
B, B' = independently H or

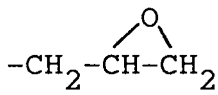

A = a radical of a fluorinated or non-fluorinated diol, containing one or more aromatic or cycloaliphatic or polycyclic rings such as, for example:

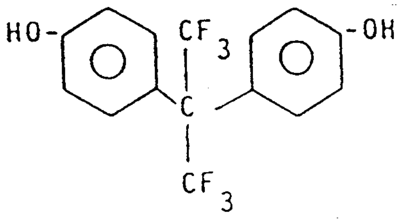 (bisphenol (AF))

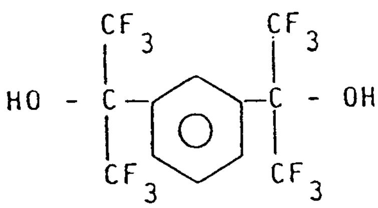

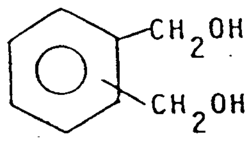

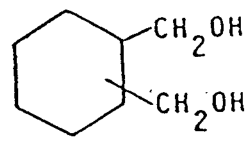

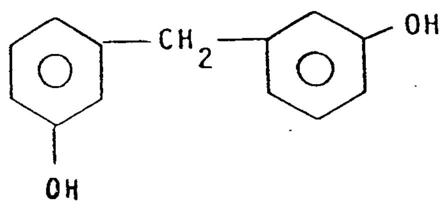

$R_f$ = a perfluoroalkylene radical which comprises sequences of an average molecular weight of 338 to 7000 of fluorooxyalkylene units selected from the following classes:

I - ($C_2F_4O$) and ($CF_2O$), said units being randomly distributed along the fluoropolyoxyalkylene chain;

II - ($C_3F_6O$), ($C_2F_4O$) and (CFXO), wherein X = F or $CF_3$, said units being randomly distributed along the fluoropolyoxyalkylene chain;

III - ($CH_2CF_2CF_2O$), said units being linked in the fluoropolyoxyalkylene chain as follows:

$-(OCF_2CF_2CH_2)_p-O-R_f'-O-(CH_2CF_2CF_2O)_q-$

wherein $R_f'$ is a fluoroalkylene group (preferably $C_1$-$C_9$) and p and q are integers, p+q being higher than 2;

IV -

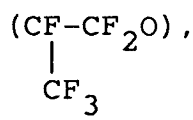

said units being linked in the fluoropolyoxyalkalene chain as follows:

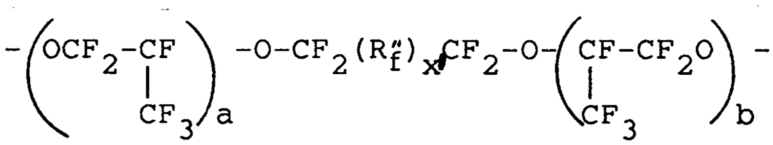

wherein $R_f''$ is a fluoroalkylene group (preferably $C_1$-$C_9$), x' is 0 or 1 and a and b are integers, a + b being higher than 2;

V - $(CF_2CF_2CF_2O)$;

VI - $(CF_2CH_2)O$;

D = A or $CH_2R_fCH_2$.

The perfluoropolyoxyalkylene diols of class I can, for example, be prepared according to IT-A-903,466.

The perfluoropolyoxyalkylene sequences of units of class II can be prepared according to US-A-3,665,091, those of classes III and V according to EP-A-148,482, those of class IV according to EP-A-151,877 and those of class VI according to US-A-4,523,039, and the formation of their functional end groups can be realised according to US-A-3,810,874.

In the case of classes II, V and VI, the bifunctional product can be obtained according to IT-A-22,920 A/85.

The various units forming the polymer of formula (I) have a random or block distribution within the polymer.

The above fluorinated polymers are crosslinkable and predominantly possess the chemical reactivity typical of epoxides when the end groups consist of an epoxy ring and the sum of indices x and y simultaneously is in the range of from 1 to 5, their chemical behaviour being predominantly that of the polyols when (x + y) >5.

Consequently, the polymers having predominantly polyol structural characteristics are subsequently treated with polyisocyanates.

However, with the change from epoxy nature to polyol nature occuring gradually, both characteristics may coexist within a polymer chain in which the sum of the units which contain A and $R_f$ ranges, for example, from 1 to 5.

Furthermore, by varying the above-mentioned polymer characteristics and by varying the amount of units A and $R_f$ forming it and their reciprocal ratio and their chemical nature, a wide range of polyurethane resins for a plurality of uses is obtained.

The polymers of the general formula I may be prepared according to the following reaction scheme:

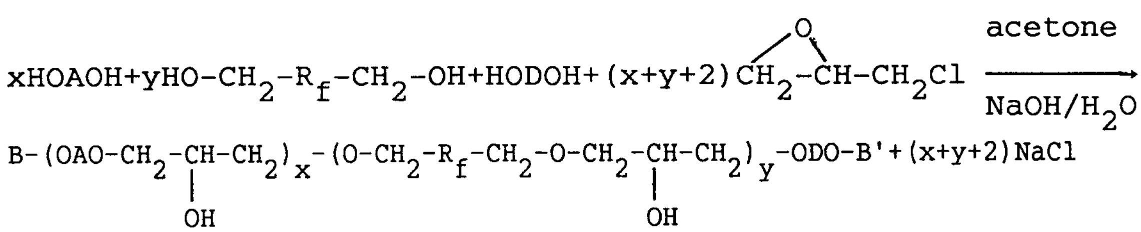


where A, $R_f$, D, x and y are the same as defined hereinbefore; and

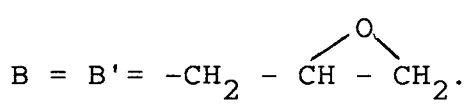

They are obtained by heating, at reflux, a solution in acetone of diol HOAOH and of diol $HOCH_2R_fCH_2OH$ with epichlorohydrin and aqueous sodium hydroxide in excess by 10 to 20% with respect to the total equivalents of the diols. At the end of the reaction, most of the acetone is evaporated and the polymer is poured into an excess of distilled water at 80 °C under stirring. The mixture is then cooled to room temperature and decanted. This operation is repeated until neutralization of the washing waters is reached. The polymer is then dissolved in a mixture of 1,1,2-trichlorotrifluoroethane (DELIFRENE® LS) and acetone (80/20) and filtered.

The product thus obtained is a random fluorinated polymer having values of x and y depending on the initial molar ratio of fluorinated diols HOAOH and $HOCH_2R_fCH_2OH$ and on the amount of epichlorohydrin utilized. In particular if, relative to the stoichiometric ratio, the excess of epichlorohydrin is >20%, the sum of x and y is ≦5, and a polymer predominantly having an epoxy nature is obtained.

Conversely, if the employed amount of epichlorohydrin varies from a molar ratio of 1:1 up to 20% in excess with respect to the total amount of diols, the polymer has a number of units x + y >5 and predominantly has the characteristics of a polyol.

Furthermore, the viscosity of the resulting polymer depends on the initial reciprocal ratio of diols HOAOH and $HOCH_2R_fCH_2OH$ and on the ratio of both to the total amount of epichlorohydrin.

It is possible to obtain polymers having viscosities which cover an extremely wide range of values in relation to the various fields of use and to the characteristics of the final resin to be obtained from said polymers.

An alternative method to the one previously described for preparing the fluorinated polymers of general formula (I) utilizes, as a starting product, the bisepoxide of formula:

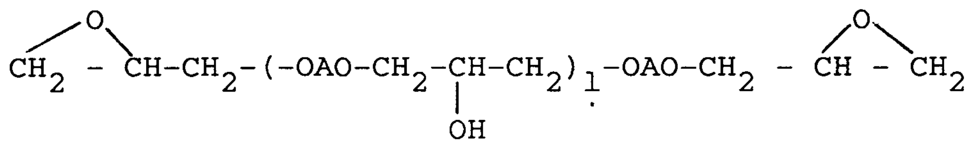

or

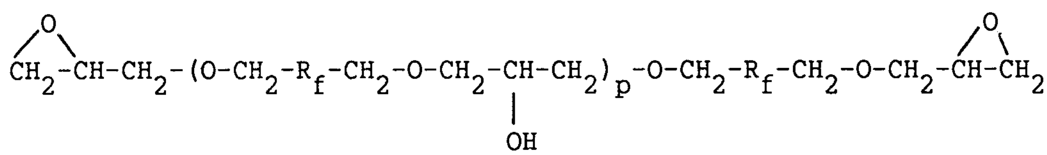

wherein A and $R_f$ are the same as defined above and l and p are integers higher than or equal to zero.

By heating the bisepoxide containing radicals A or $R_f$ with the diol of $CH_2R_fCH_2$ or of A, respectively, and with a catalyst consisting of a tertiary amine (such as diazabicyclooctane and dimethylbenzylamine) to 100 to 165°C for 6 to 20 hours in a thermoregulated pressure reactor, fluorinated block polymers having the value of x and y depending on the molar ratio of the reagents containing groups A and $R_f$ are obtained. High molecular weight polymers are obtained, in particular, when the $A/R_f$ molar ratio is close to 0.5 or to 2. The end groups will be of the epoxy or hydroxy type depending on whether an excess of bisepoxide or of diol is used.

The fluorinated block polymers thus obtained behave in the same manner as the random polymers obtained according to the method described before.

For both types of polymers, i.e., the block polymers and the random polymers, the values of x and y can be determined by titration of the epoxy end groups or of the hydroxy groups and by NMR analysis.

Resins containing urethane-type bonds according to the present invention are prepared by treating the polymers having structural characteristics which are predominantly those of polyols with polyisocyanate and catalyst, optionally in the presence of a solvent. Fluorinated or non-fluorinated di-, tri- and tetra-isocyanates can be used as well.

Preferred fluorinated diisocyanates are those having an average molecular weight of 500 to 7000 and comprised by the following general formula:

$$OCN - R - Z - CF_2O-(C_2F_4O)_m-(CF_2O)_n-CF_2 - Z - R - NCO$$

wherein:

Z may be a single bond or a group of the type:
$-CONH-$, $-CH_2-$, $-CH_2O-$, $-CH_2OCH_2-$, $-O-$, $-CH_2OSO_2-$;
R is an aliphatic divalent radical having a $C_1$-$C_{12}$ chain, or a cycloaliphatic or aromatic radical; in particular,

it may be:
$-(CH_2)_6-$,

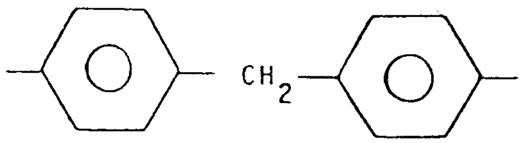 , 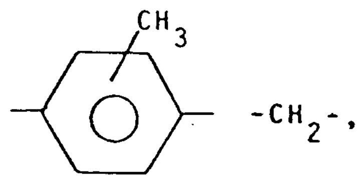

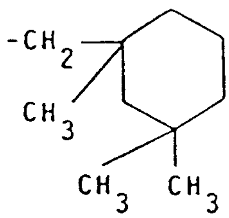 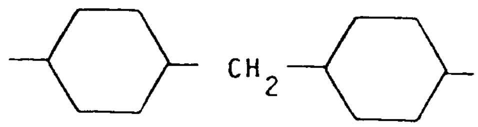

and where the units $(CF_2O)$ and $(C_2F_4O)$ are statistically distributed along the chain, m and n are integers and the m/n ratio ranges from 0.2 to 2, preferably from 0.5 to 1.2.

The above-mentioned perfluoropolyoxyalkylene isocyanates can be obtained according to known methods, for example, those described in US-A-3,810,874.

Among the non-fluorinated polyisocyanates, use is preferably made of hexamethylene diisocyanate (HDI), isophorone diisocyanate (IPDI), toluene diisocyanate (TDI), methylene-bis-(4-cyclohexyl isocyanate) ($H_{12}MDI$) and trimers of TDI and HDI.

The polyol polymers and the polyisocyanate are reacted according to an equivalent OH/NCO ratio ranging from 0.7 to 1.3, preferably from 0.9 to 1.1.

For reactions in solvent it is possible to utilize solvents such as esters, e.g., butylacetate and amylacetate, ketones such as methylethylketone and methylisobutylketone and aromatic hydrocarbons such as xylene and toluene, optionally in admixture with solvents which are typical for the perfluoropolyethers such as 1,1,2-trichlorotrifluoroethane (DELIFRENE ® LS). The preferred solvent is a 80/20 mixture of DELIFRENE ® LS and acetone.

The amount of solvent employed depends on the desired viscosity of the solution. The reaction giving rise to the polyurethane bond may, optionally, be catalyzed by the catalysts which are generally utilized in the technology of the polyurethanes obtained from polyols and polyisocyanates. In any case, the addition of an effective catalyst system permits operation at low temperatures (20 to 60 ° C) and within short times. Furthermore, a proper proportioning of the catalyst permits optimization of the pot life, i.e., the time during which the reaction mixture remains sufficiently fluid.

Suitable catalysts are the derivatives of tin such as dibutyltin dilaurate, dibutyltin acetate, dibutyltin oxide, derivatives of iron such as iron acetylacetonate, titanium alcoholates such as titanium tetraisopropylate, tertiary amines such as triethylamine, in amounts ranging from 0.001 to 2% by weight, preferably from 0.01 to 0.5% by weight, based on the total weight.

The solutions containing polyol polymer for providing resins containing urethane-type bonds according to the present invention can, depending on the purposes for which they are to be used, include other ingredients such as pigments or fillers of other nature which are capable of reducing the costs of the manufactured article, of increasing the consistency thereof, of promoting the homogeneous distribution of the pigment in the resin or contribute towards reinforcing the resin structure from a mechanical viewpoint.

The pigments and other fillers which may or may not have the nature of pigments may be added so as to coat and/or protect the surface on which the resin is spread, for example, by reflecting the destructive sun rays which otherwise could pass through the resin and degrade the underlying material.

Owing to their high fluorine content, the resins of the invention are compatible with specific fillers such as polytetrafluoroethylene (PTFE) and fluoroethylene/propylene copolymers (FEP), which may be added with a view to improve some mechanical characteristics such as impact strength and resistance to abrasion.

The chemico-physical and mechanical properties of the new class of fluorinated resins according to the present invention make these materials suitable for a plurality of utilities.

The most important characteristics of such resins are:

- a high fluorine content;

- a high resistance to chemical agents, to hydrolysis and to atmospherical agents;
- a high thermal stability;
- a very low refraction index;
- a high dimensional stability;
- low wettability;
- a high degree of cross-linking;
- self-lubricating properties;
- excellent mechanical properties;
- water-repellent and oil-repellent properties;
- a low Tg;
- a low dielectric constant;
- a high thermal dissipation coefficient.

In consideration of such exceptional characteristics, some of the fields of use for the products of the invention are those of adhesives, structural materials and high-efficiency composite materials or, for example, in electronics as supporting resins for printed circuits, encapsulating resins for chips, connection resins for electric cables, etc.

Furthermore, a very broad field of use is that of coatings and paints in general, more particularly, for printed circuits, magnetic tapes and discs, optical reading discs, optical fibres and optical systems in general, barrier paints for sea-environments, water-repellent coatings for underwater systems, coatings of mechanical parts immersed in solvents and, in general, coatings of metal systems subject to corrosion.

The advantages deriving from the use of the resins of the invention are generally due to the specific characteristics of the fluorinated polymers of formula (I) which advantages are not present in the known products of the art. A considerable advantage, mainly in the field of coatings and paints resides, in particular, in the fact that the above polymers can have a very wide range of viscosity wherefore, in the case of subsequent crosslinking in situ they can, if they already exhibit an optimum viscosity, be applied to the substrate as such or they can be dissolved or diluted in a suitable solvent up to the desired viscosity and then applied to the substrate to be coated and then cross-linked.

Thus, an interesting application is that which is accomplished by mixing two solutions which have the desired viscosity even if it is very low and which, in a proper solvent, respectively contain as a first solution the epoxy polymer of the polyol and as a second solution the polyisocyanate.

By immersing the substrate to be coated into the mixture thus prepared and after evaporation of the solvent and suitable final heat treatment it is possible to obtain self-lubricating protective coatings which may be extremely thin. Such a procedure is particularly suitable when the substrate to be coated is composed of materials which are potentially capable of interacting with the hydroxy groups of the polymer.

The following examples merely illustrate the present invention without, however, limiting it.

EXAMPLE 1 (Preparation of the Starting Fluorinated Polymer)

67.2 g of bisphenol AF (0.2 moles) (formula I), 80 g of $\alpha,\omega$-bis-(hydroxymethyl)polyoxyperfluoroalkylene having a molecular weight of 400 (Z DOL®400) (0.2 moles) (formula II), 111 g of epichlorohydrin (1.2 moles) (formula III) were mixed in 800 ml of acetone in a 2-liter three-neck-flask. Separately, an aqueous solution of sodium hydroxide was prepared by dissolving 35.2 g of NaOH (0.88 moles) in 35.2 ml of distilled $H_2O$. This solution was added by means of a dropping funnel over a period of 15 minutes, maintaining an inside temperature of 35 °C. On conclusion of the addition, the solution was heated at reflux for 8 hours. Most of the acetone was evaporated and the polymer was poured into distilled water at 80 °C (10 ml $H_2O$/g of polymer) under vigorous stirring for 5 minutes. The mixture was then cooled to room temperature and decanted. This step was repeated until neutrality of the washing water was achieved.

The polymer was then placed into an oven at 120 °C and allowed to dry overnight. Then it was dissolved in a mixture of 1,1,2-trichlorotrifluoroethane (DELIFRENE ® LS) and acetone 80/20 and filtered. 180 g (yield = 89%) of a fluid, fluorinated (40% of F; 3.5% of H), transparent, amber-coloured polymer having the following characteristics were obtained:

| | |
|---|---|
| epoxy equivalent weight | : 420 |
| $\eta$25 °C | : 14.4 Pa.s |

| | |
|---|---|
| $\eta$50 ° C | : 0.74 Pa.s |
| refraction index $n_D$20 ° C | : 1.448 |

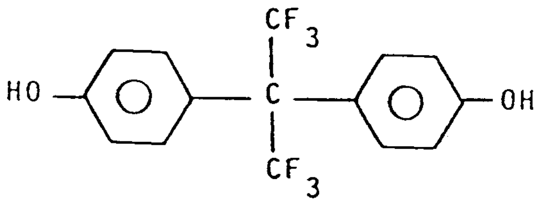

(formula I)

$HO-CH_2-CF_2O-(C_2F_4O)_m-(CF_2O)_n-CF_2-CH_2-OH$ (formula II)

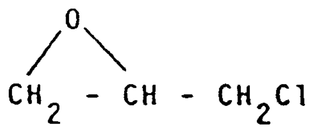

(formula III)

EXAMPLES 2 to 5 (Preparation of Starting Materials)

Examples 2 to 5 show the effect of the variation of the ratios among the three components (bisphenol AF, Z DOL ® 400, epichlorohydrin) on the series of fluorinated polymers prepared according to the procedure described in example 1.

The characteristics of the resulting polymers are indicated in table 1.

REFERENCE EXAMPLE

In a three-neck flask 22.4 g of potassium t-butylate (0.2 moles) were dissolved in 250 ml of t-butyl alcohol maintained at a temperature of 35 ° C by means of an external heating bath. Over a period of 15 minutes 200 g of $\alpha,\omega$-bis-(hydroxymethyl)polyoxyperfluoroalkylene (formula II), having a molecular weight = 2000 (0.1 moles) were added from a dropping funnel and the mixture was allowed to react for one hour at 35 ° C.

27.8 g of epichlorohydrin (0.3 moles) were added and the mixture was then heated to 70 ° C for 4 hours. At the end, the raw product was poured into 700 ml of distilled water at 25 ° C under stirring. It was then allowed to rest and the heavier phase was separated. This phase was dissolved in a solution of DELIFRENE® LS and acetone (70/20), dehydrated with $Na_2SO_4$ and filtered. 200 g of a fluorinated (57.7% of F; 0.6% of H) (yield = 93.5%), fluid, transparent, amber-coloured polymer having the following characteristics were obtained:

| | |
|---|---|
| epoxy equivalent weight | : 2140 |
| $\eta$ at 25 ° C | : 0.48 Pas. |
| refraction index $n_D$20 ° C | : 1.309. |

EXAMPLE 6 (Preparation of Starting Materials)

According to the procedure of the above reference example a fluorinated polymer was prepared by using 0.1 moles of $\alpha,\omega$-bis-(hydroxymethyl)polyoxyperfluoroalkylene having a molecular weight = 2000 and 0.5 moles of epichlorohydrin.

The fluorinated polymer obtained (57.8% of F; 0.5% of H) exhibited the following characteristics:

| | |
|---|---|
| epoxy equivalent weight: | 1293 |
| $\eta$ at 20 ° C: | 62 mPa.s |
| refraction index $n_D$20 ° C: | 1.305 |

52 g of bisphenol AF (0.155 moles), 100 g of the above product (0.077 moles) and 1 g of diazadicyclooctane (commercial name: DABCO®) were charged into a jacketed pressure reactor and the mixture was stirred for 10 hours at 165 ° C. 150 g of a fluorinated polymer (53% of F; 1% of H) having the following characteristics were obtained:

| | |
|---|---|
| epoxy equivalent weight: | 660 |
| $\eta$ at 25 °C: | 98.9 Pa.s |
| $\eta$ at 50 °C: | 2.24 Pa.s |

EXAMPLE I

In a three-neck flask 90 g of the polymer of example 4 (0.072 equivalents), 14.2 g of DESMODUR ® N 100 (hexamethylene-isocyanate trimer) (0.072 equivalents) and 0.20 ml of a 0.2008M solution of dibutyltin diacetate in acetone (0.1% by moles) were mixed at 50 °C in a nitrogen atmosphere. The mixture was stirred for 5 minutes, deaerated and poured into a mould where it was left for 20 hours at 50 °C.

A transparent, rubber-like polyurethane resin, insoluble in solvents such as DELIFRENE ® LS and acetone, with a hardness (Shore A/3") equal to 70 (according to ASTM D 2240) was obtained.

EXAMPLE II

In a three-neck-flask 40 g of the polymer of example 6 (0.06 equivalents) were mixed at 80 °C in a nitrogen atmosphere with 68.5 g of $\alpha,\omega$-bis-(tolylisocyanate)polyoxyperfluoroalkylene having a molecular weight = 2,300 (0.06 equivalents) (formula IV below) and 0.15 ml of a 0.2008 M solution of dibutyltin-diacetate in acetone. The mixture was stirred for 30 minutes, deaerated and poured into a mould where it was left at 85 °C for 20 hours.

A semi-rigid resin, insoluble in DELIFRENE® acetone and exhibiting the following mechanical characteristics was obtained:

| | |
|---|---|
| hardness (Shore A/3"): | 88 |
| tensile strength: | 75 kg/cm$^2$ |
| elongation at break: | 95% |

Tg: -120 ° C

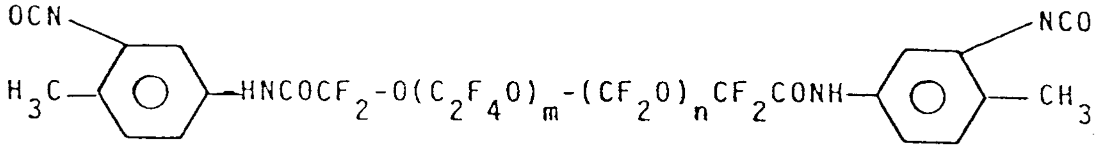

(formula IV)

TABLE I - TEST WITH DIOL HAVING A MOLECULAR WEIGHT OF 400

| Test | Molar Ratios BISPHENOL AF | DIOL 400 | EPICHLORO-HYDRIN | Epoxy eq. weight (1) | Hydroxy eq.weight (1) | 25°C η poise (Pa.s) | 50°C η poise (Pa.s) | F content % |
|---|---|---|---|---|---|---|---|---|
| 1 | 0.5 | 0.5 | 3 | 420 | nd(2) | 144 (14.4) | 7.4 (0.74) | 40 |
| 2 | 0.75 | 0.25 | 3 | 544 | .nd(2) | nd(2) | 5477 (547.7) | 38 |
| 3 | 0.25 | 0.75 | 3 | 440 | nd(2) | 5.3 (0.53) | nd(2) | 51 |
| 4 | 0.5 | 0.5 | 1.2 | 1253 | 537 | nd(2) | 2858 (285.8) | 43 |
| 5 | 0.5 | 0.5 | 1.05 | 7824 | 570 | nd(2) | 50000 (5000) | 46 |

(1) eq. weight = equivalent weight

(2) nd = not determined

## Claims

### Claims for the following Contracting States : BE, DE, FR, GB, NL, SE

**1.** Resins containing bonus of the urethane type, obtainable from the reaction of a polyisocyanate with fluorinated polymers having the general formula (I):

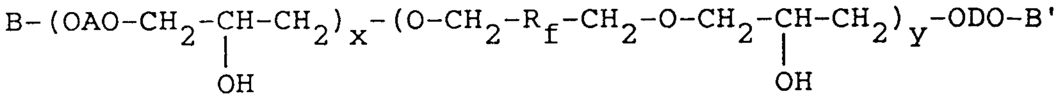 (I)

where the units with the subscripts x and y have a random distribution or a block distribution within said polymer and:

x = an integer of up to 20, but not zero;
y = an integer of from 1 to 20;
B, B' = independently H or

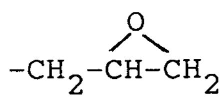

A = a radical of a fluorinated or non-fluorinated diol containing one or more aromatic or cycloaliphatic or polycyclic rings;
$R_f$ = a perfluoroalkylene radical which comprises sequences of an average molecular weight of 338 to 7000 of fluorooxyalkylene units selected from the following classes:

I - ($C_2F_4O$) and ($CF_2O$), said units being randomly distributed along the fluoropolyoxyalkylene chain;

II - ($C_3F_6O$), ($C_2F_4O$) and (CFXO), wherein X = F or $CF_3$, said units being randomly distributed along the fluoropolyoxyalkylene chain;

III - ($CH_2CF_2CF_2O$), said units being linked in the fluoropolyoxyalkylene chain as follows:

$-(OCF_2CF_2CH_2)_p-O-R'_fO-(CH_2CF_2CF_2O)_q-$

wherein $R'_f$ is a fluoroalkylene group and p and q are integers, p + q being higher than 2;

IV -

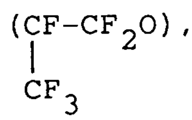

said units being linked in the fluoropolyoxyalkylene chain as follows:

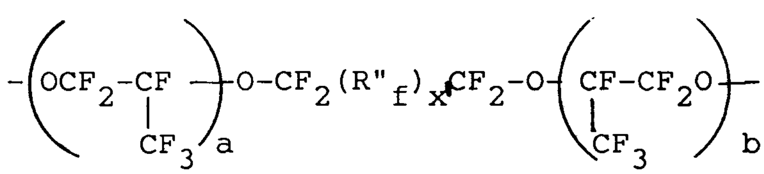

wherein $R''_f$ is a fluoroalkylene group, x' is 0 or 1 and a and b are integers, a + b being higher than 2;

V - ($CF_2CF_2CF_2O$);

VI - $(CF_2CF_2O)$;

D = A or $CH_2R_fCH_2$.

2. The resins according to claim 1 in which diol HOAOH is selected from compounds of the following formulae:

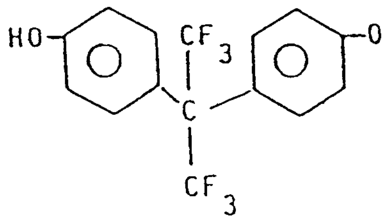 (bisphenol (AF)

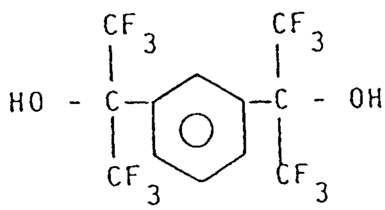

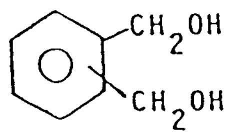

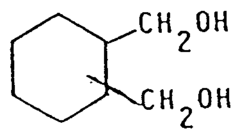

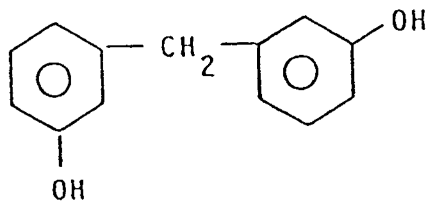

3. The resins according to claim 1 or 2, in which the polyisocyanate is selected from fluorinated diisocyanates having an average molecular weight of from 500 to 7000 and being represented by the following formula:

$OCN-R-Z-CF_2O-(C_2F_4O)_m-(CF_2O)_n-CF_2-Z-R-NCO$

wherein Z is a single bond or a group of the type:

-CONH-, $CH_2$-, $-CH_2O-$, $-CH_2OCH_2-$, -O-, $-CH_2OSO_2-$;

R is a divalent aliphatic radical with a $C_1$-$C_{12}$ chain, or a cycloaliphatic or aromatic radical and wherein unit $(CF_2O)$ and unit $(C_2F_4O)$ are statistically distributed along the chain, m and n are integers and the m/n ratio ranges from 0.2 to 2, preferably from 0.5 to 1.2.

4. The resins according to claim 3, in which radical R of the polyisocyanate is selected from:

$-(CH_2)_6-$, 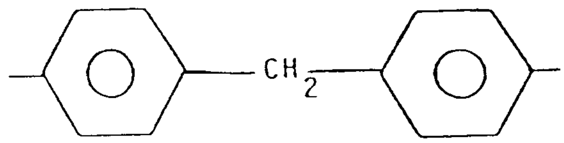 , 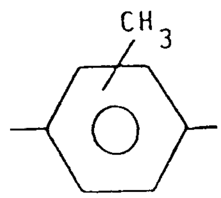

$-CH_2-$,

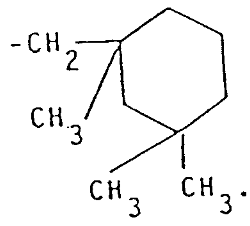 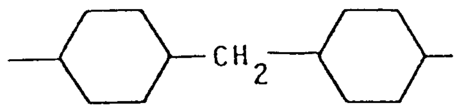

5. The resins according to claims 1 to 3, in which the polyisocyanate is selected from hexamethylene diisocyanate (HDI), isophorone diisocyanate (IPDI), toluene diisocyanate (TDI), methylene-bis-(4-cyclohexylisocyanate) ($H_{12}$-MDI) and trimers of TDI and HDI.

6. The resins according to any one of claims 1 to 5, in which the OH/NCO equivalent ratio ranges from 0.7 to 1.3, preferably from 0.9 to 1.1.

7. The resins according to any one of claims 1 to 6, in which the reaction of said fluorinated polymers with polyisocyanate is accomplished in a solvent consisting of a 80/20 mixture of 1,1,2-trichlorotrifluoroethane and acetone.

8. The resins according to claim 1 or 2 wherein ratio of $A/R_f$ ranges from 3:1 to 1:3, the sum $(x+y)$ being not higher than 40.

9. A process for preparing protective coatings,characterized by mixing together a solution of the fluorinated polymer defined in claims 1 or 2 and a solution containing an isocyanate and, subsequently, evaporating the solvent and subjecting the mixture to a heat treatment.

10. The use of the resins of claims 1 to 8 for preparing adhesives which are also suited for low temperatures.

11. The use of the resins of claims 1 to 8 as structural materials with excellent mechanical characteristics.

12. The use of the resins of claims 1 to 8 as protective films on magnetic tapes and discs.

13. The use of the resins of claims 1 to 8 as protective coatings having lubricating properties, low wettability and a high resistance to atmospheric agents.

**Claims for the following Contracting State : AT**

1. A process for preparing resins containing bonds of the urethane type, which comprises reacting a polyisocyanate with fluorinated polymers having the general formula (I):

$$B-(OAO-CH_2-\underset{\displaystyle OH}{\underset{|}{CH}}-CH_2)_x-(O-CH_2-R_f-CH_2-O-CH_2-\underset{\displaystyle OH}{\underset{|}{CH}}-CH_2)_y-ODO-B' \quad (I)$$

where the units with the subscripts x and y have a random distribution or a block distribution within said

polymer and:

x = an integer of up to 20, but not zero;

y = an integer of from 1 to 20;

B, B' = independently H or

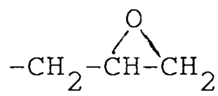

A = a radical of a fluorinated or non-fluorinated diol containing one or more aromatic or cycloaliphatic or polycyclic rings;

$R_f$ = a perfluoroalkylene radical which comprises sequences of an average molecular weight of 338 to 7000 of fluorooxyalkylene units selected from the following classes:

I - $(C_2F_4O)$ and $(CF_2O)$, said units being randomly distributed along the fluoropolyoxyalkylene chain;

II - $(C_3F_6O)$, $(C_2F_4O)$ and (CFXO), wherein X = F or $CF_3$, said units being randomly distributed along the fluoropolyoxyalkylene chain;

III - $(CH_2CF_2CF_2O)$, said units being linked in the fluoropolyoxyalkylene chain as follows:

$-(OCF_2CF_2CH_2)_p-O-R'_fO-(CH_2CF_2CF_2O)_q-$

wherein $R'_f$ is a fluoroalkylene group and p and q are integers, p + q being higher than 2;

IV -

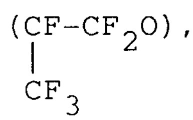

said units being linked in the fluoropolyoxyalkylene chain as follows:

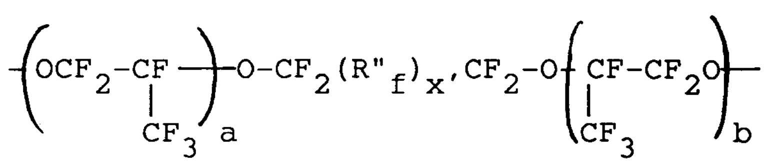

wherein $R''_f$ is a fluoroalkylene group, x' is 0 or 1 and a and b are integers, a + b being higher than 2;

V - $(CF_2CF_2CF_2O)$;

VI - $(CF_2CF_2O)$;

D = A or $CH_2R_fCH_2$.

**2.** The process according to claim 1, in which diol HOAOH is selected from compounds of the following formulae:

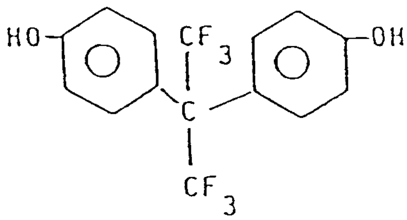 (bisphenol (AF)

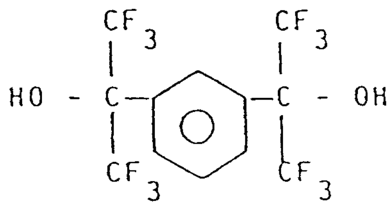

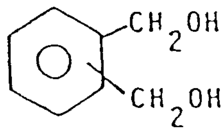

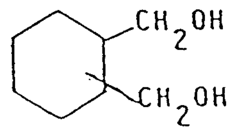

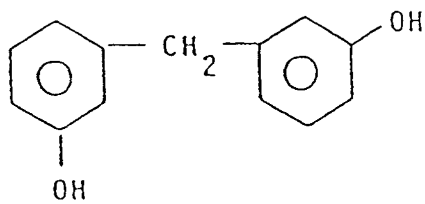

**3.** The process according to claim 1 or 2, in which the polyisocyanate is selected from fluorinated diisocyanates having an average molecular weight of from 500 to 7000 and being represented by the following formula:

$OCN\text{-}R\text{-}Z\text{-}CF_2O\text{-}(C_2F_4O)_m\text{-}(CF_2O)_n\text{-}CF_2\text{-}Z\text{-}R\text{-}NCO$

wherein Z is a single bond or a group of the type:
$-CONH-$, $-CH_2-$, $-CH_2O-$, $-CH_2OCH_2-$, $-O-$, $-CH_2OSO_2-$;
R is a divalent aliphatic radical with a $C_1$-$C_{12}$ chain, or a cycloaliphatic or aromatic radical and wherein unit ($CF_2O$) and unit ($C_2F_4O$) are statistically distributed along the chain, m and n are integers and the m/n ratio ranges from 0.2 to 2, preferably from 0.5 to 1.2.

**4.** The process according to claim 3, in which radical R of the polyisocyanate is selected from:

$-(CH_2)_6-$, 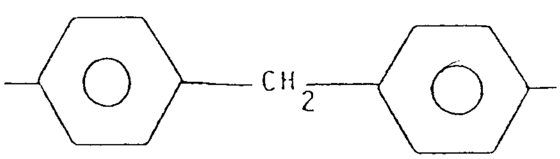 , 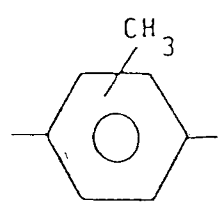

$-CH_2-$,

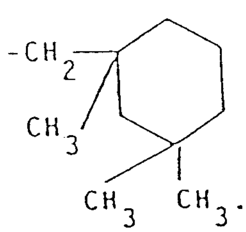 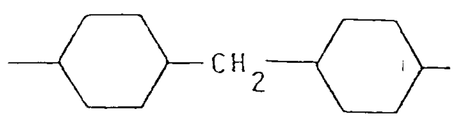 .

**5.** The process according to claims 1 to 3, in which the polyisocyanate is selected from hexamethylene diisocyanate (HDI), isophorone diisocyanate (IPDI), toluene diisocyanate (TDI), methylene-bis-(4-cyclohexylisocyanate) ($H_{12}$-MDI) and trimers of TDI and HDI.

**6.** The process according to any one of claims 1 to 5, in which the OH/NCO equivalent ratio ranges from 0.7 to 1.3, preferably from 0.9 to 1.1.

**7.** The process according to any one of claims 1 to 6, in which said fluorinated polymers are reacted with said polyisocyanate in a solvent consisting of a 80/20 mixture of 1,1,2-trichlorotrifluoroethane and acetone.

**8.** The process according to claim 1 or 2, wherein the ratio of $A/R_f$ ranges from 3:1 to 1:3, the sum (x + y) being not higher than 40.

**9.** A process for preparing protective coatings characterized by mixing together a solution of the fluorinated polymer prepared as in claims 1 or 2 and a solution containing an isocyanate and, subsequently, evaporating the solvent and subjecting the mixture to a heat treatment.

**10.** The use of the resins prepared as in claims 1 to 8 for preparing adhesives which are also suited for low temperatures.

**11.** The use of the resins prepared as in claims 1 to 8 as structural materials with excellent mechanical characteristics.

**12.** The use of the resins prepared as in claims 1 to 8 as protective films on magnetic tapes and discs.

**13.** The use of the resins prepared as in claims 1 to 8 as protective coatings having lubricating properties, low wettability and a high resistance to atmospheric agents.

## Revendications

**Revendication pour les Etats contractants suivants : BE, DE, FR, GB, NL, SE**

**1.** Résines contenant des liaisons du type uréthanne pouvant être obtenues par la réaction d'un polyisocyanate avec des polymères fluorés répondant à la formule générale (I)

$$B\text{-}(OAO\text{-}CH_2\text{-}\underset{OH}{CH}\text{-}CH_2)_x\text{-}(O\text{-}CH_2\text{-}R_f\text{-}CH_2\text{-}\underset{OH}{CH}\text{-}CH_2)_y\text{-}ODO\text{-}B' \qquad (I)$$

dans laquelle les motifs affectés des indices x et y présentent une distribution statistique ou une distribution séquencée (bloc) au sein de ce polymère et:

x = un nombre entier atteignant jusqu'à 20 mais différent de zéro;
y = un nombre entier compris entre 1 et 20;
B, B' = indépendamment H ou

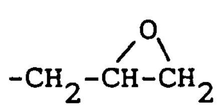

A = un radical d'un diol fluoré ou non fluoré contenant un ou plusieurs cycles aromatiques ou cycloaliphatiques ou polycycliques;
$R_f$ = un radical perfluoroalkylène qui comprend des séquences d'un poids moléculaire moyen de 338 à 7000 de motifs fluorooxyalkylène choisis dans les classes suivantes:

I- ($C_2F_4O$) et ($CF_2O$), ces motifs étant distribués statistiquement le long de la chaîne fluoropolyoxyalkylène;
II- ($C_3F_6O$), ($C_2F_4O$) et (CFXO), dans lesquelles X = F ou $CF_3$, ces motifs étant distribués statistiquement le long de la chaîne fluoropolyoxyalkylène;
III- ($CH_2CF_2CF_2O$), ces motifs étant reliés dans la chaîne fluoropolyoxyalkylène de la façon suivante:

$-(OCF_2CF_2CH_2)_p-O-R'_f-O-(CH_2CF_2CF_2O)_q-$

dans laquelle $R'_f$ représente un groupe fluoroalkylène et p et q sont des nombres entiers, p + q étant supérieur à 2;
IV-

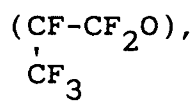

ces motifs étant reliés dans la chaîne fluoropolyoxyalkylène de la façon suivante:

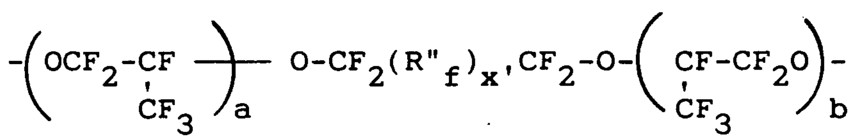

dans laquelle $R''_f$ est un groupe fluoroalkylène, x' est égal à 0 ou 1 et a et b sont des entiers, a + b étant supérieur à 2;
V- ($CF_2CF_2CF_2O$);
VI- ($CF_2CH_2O$);

D = A ou $CH_2R_fCH_2$.

2. Les résines selon la revendication 1, caractérisées en ce que le diol HOAOH est choisi parmi les composés répondant à la formule suivante:

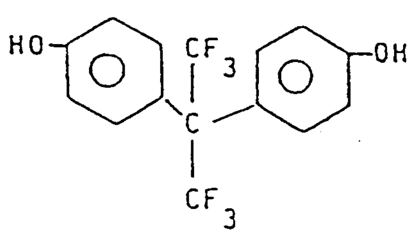

(bisphénol (AF))

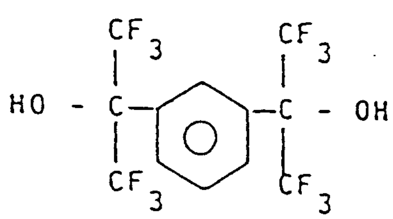

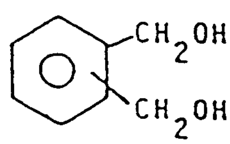

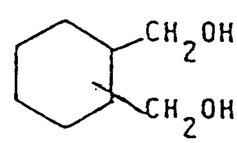

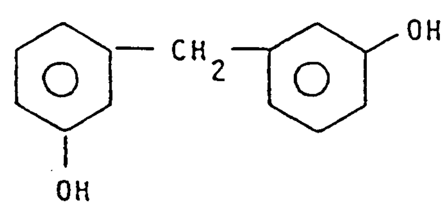

3. Les résines selon la revendication 1 ou 2, caractérisées en ce que le polyisocyanate est choisi parmi les diisocyanates fluorés dont le poids moléculaire moyen est compris entre 500 et 7000 et qui sont représentés par la formule suivante:

$OCN-R-Z-CF_2O-(C_2F_4O)_m-(CF_2O)_n-CF_2-Z-R-NCO$

dans laquelle:

Z représente une liaison simple ou un groupe du type: $-CONH-$, $CH_2-$, $CH_2O-$, $-CH_2OCH_2-$, $-O-$, $CH_2OSO_2-$;

R représente un radical divalent renfermant une chaîne en $C_1$ à $C_{12}$ ou un radical cycloaliphatique ou aromatique;

en dans lequel le motif ($CF_2O$) et le motif ($C_2F_4O$) sont distribués statistiquement le long de la chaîne, m et n sont des entiers et le rapport m/n est compris entre 0,2 et 2, de préférence 0,5 et 1,2.

4. Les résines selon la revendication 3, caractérisées en ce que le radical R du polyisocyanate est choisi parmi:

$-(CH_2)_6-$, 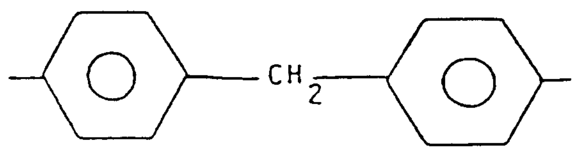 , 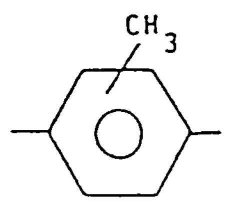

$-CH_2-$,

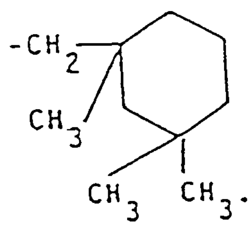

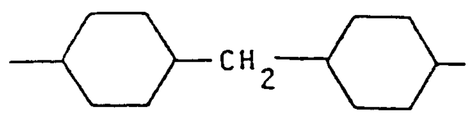

5. Les résines selon les revendications 1 à 3, caractérisées en ce que le polyisocyanate est choisi parmi l'hexaméthylène diisocyanate (HDI), isophorone diisocyanate (IPDI), toluène diisocyanate (TDL), méthylène-bis-(4-cyclohexylisocyanate) ($H_{12}$-MDI) et des trimères de TDI et HIDI.

6. Les résines selon l'une quelconque des revendications 1 à 5, caractérisées en ce que le rapport équivalent OH/équivalent NCO est compris entre 0,7 et 1,3, de préférence 0,9 et 1,1.

7. Les résines selon l'une quelconque des revendications 1 à 6, caractérisées en ce que la réaction de ces polymères fluorés avec le polyisocyanate est mise en oeuvre dans un solvant constitué d'un mélange 80/20 de 1,1,2-trichlorotrifluoroéthane et d'acétone.

8. Les résines selon la revendication 1 ou 2, caractérisées en ce que le rapport de $A/R_f$ est compris entre 3/1 et 1/3, la somme $(x+y)$ n'étant pas supérieure à 40.

9. Un procédé de préparation de revêtement protecteur caractérisé en ce que l'on mélange ensemble une solution du polymère fluoré défini dans les revendications 1 ou 2 et une solution contenant un isocyanate et, ultérieurement, on évapore le solvant et on soumet le mélange à un traitement thermique.

10. L'utilisation des résines selon la revendication 1 à 8, pour préparer des colles qui conviennent également à des basses températures.

11. L'utilisation des résines selon la revendication 1 à 8, comme matériau structurel présentant d'excellentes caractéristiques mécaniques.

12. L'utilisation des résines selon la revendication 1 à 8, comme film protecteur sur rubans et disque magnétiques.

13. L'utilisation des résines selon la revendication 1 à 8, comme revêtement protecteur présentant des propriétés lubrifiantes, une faible mouillabilité et une résistance élevée aux agents atmosphériques.

**Revendications pour l'Etat contractant suivant : AT**

1. Procédé de préparation de résines contenant des liaisons du type uréthanne, qui comprend la réaction d'un polyisocyanate avec des polymères fluorés répondant à la formule générale (I)

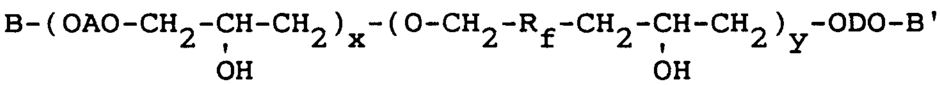 (I)

dans laquelle les motifs affectés des indices x et y présentent une distribution statistique ou une distribution séquencée (bloc) au sein de ce polymère et:

x = un nombre entier atteignant jusqu'à 20 mais différent de zéro;
y = un nombre entier compris entre 1 et 20;
B, B' = indépendamment H ou

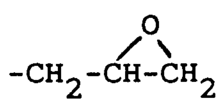

A = un radical d'un diol fluoré ou non fluoré contenant un ou plusieurs cycles aromatiques ou cycloaliphatiques ou polycycliques;
$R_f$ = un radical perfluoroalkylène qui comprend des séquences d'un poids moléculaire moyen de 338 à 7000 de motifs fluorooxyalkylène choisis dans les classes suivantes:

I- ($C_2F_4O$) et ($CF_2O$), ces motifs étant distribués statistiquement le long de la chaîne fluoropolyoxyalkylène;

II- ($C_3F_6O$), ($C_2F_4O$) et (CFXO), dans lesquelles X = F ou $CF_3$, ces motifs étant distribués statistiquement le long de la chaîne fluoropolyoxyalkylène;

III- ($CH_2CF_2CF_2O$), ces motifs étant reliés dans la chaîne fluoropolyoxyalkylène de la façon suivante:

$-(OCF_2CF_2CH_2)_p-O-R'_f-O-(CH_2CF_2CF_2O)_q-$

dans laquelle $R'_f$ représente un groupe fluoroalkylène et p et q sont des nombres entiers, p + q étant supérieur à 2;

IV-

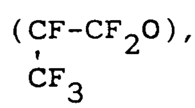

ces motifs étant reliés dans la chaîne fluoropolyoxyalkylène de la façon suivante:

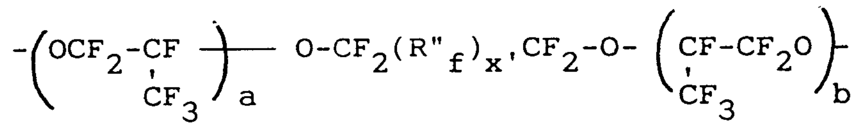

dans laquelle $R''_f$ est un groupe fluoroalkylène, x' est égal à 0 ou 1 et a et b sont des entiers, a + b étant supérieur à 2;

V- $(CF_2CF_2CF_2O)$;

VI- $(CF_2CH_2O)$;

D = A ou $CH_2R_fCH_2$.

**2.** Le procédé selon la revendication 1, caractérisé en ce que le diol HOAOH est choisi parmi les composés répondant à la formule suivante:

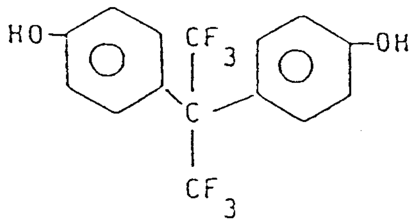 (bisphénol (AF))

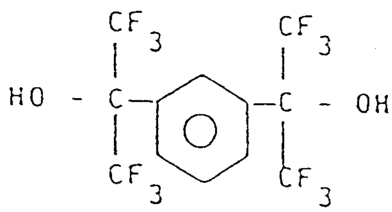

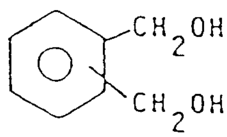

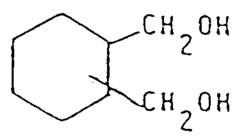

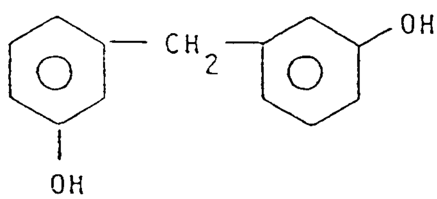

**3.** Le procédé selon la revendication 1 ou 2, caractérisé en ce que le polyisocyanate est choisi parmi les diisocyanates fluorés dont le poids moléculaire moyen est compris entre 500 et 7000 et qui sont représentés par la formule suivante:

$OCN\text{-}R\text{-}Z\text{-}CF_2O\text{-}(C_2F_4O)_m\text{-}(CF_2O)_n\text{-}CF_2\text{-}Z\text{-}R\text{-}NCO$

dans laquelle:

Z représente une liaison simple ou un groupe du type: -CONH-, $CH_2$-, $CH_2O$-, $-CH_2OCH_2$-, -O-, $CH_2OSO_2$-;

R représente un radical divalent renfermant une chaîne en $C_1$ à $C_{12}$ ou un radical cycloaliphatique ou aromatique;

en dans lequel le motif $(CF_2O)$ et le motif $(C_2F_4O)$ sont distribués statistiquement le long de la chaîne, m et n sont des entiers et le rapport m/n est compris entre 0,2 et 2, de préférence 0,5 et 1,2.

4. Le procédé selon la revendication 3, caractérisé en ce que le radical R du polyisocyanate est choisi parmi:

$-(CH_2)_6-$,

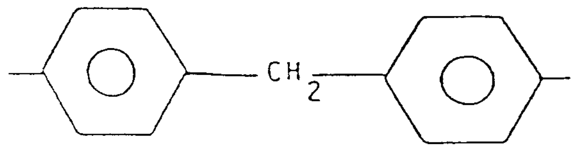

,

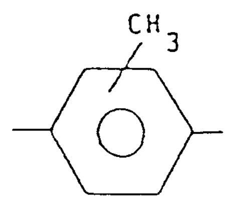

$-CH_2-$,

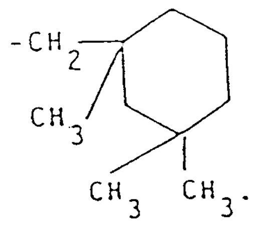

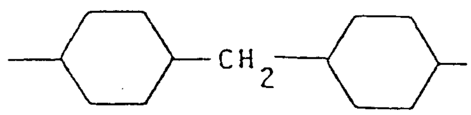

5. Le procédé selon les revendications 1 à 3, caractérisé en ce que le polyisocyanate est choisi parmi l'hexaméthylène diisocyanate (HDI), isophorone diisocyanate (IPDI), toluène diisocyanate (TDI), méthylène-bis-(4-cyclohexylisocyanate) ($H_{12}$-MDI) et des trimères de TDI et HDI.

6. Le procédé selon l'une quelconque des revendications 1 à 5, caractérisé en ce que le rapport équivalent OH/équivalent NCO est compris entre 0,7 et 1,3, de préférence 0,9 et 1,1.

7. Le procédé selon l'une quelconque des revendications 1 à 6, caractérisé en ce que la réaction de ces polymères fluorés avec le polyisocyanate est mise en oeuvre dans un solvant constitué d'un mélange 80/20 de 1,1,2-trichlorotrifluoroéthane et d'acétone.

8. Le procédé selon la revendication 1 ou 2, caractérisé en ce que le rapport de $A/R_f$ est compris entre 3/1 et 1/3, la somme (x + y) n'étant pas supérieure à 40.

9. Un procédé de préparation de revêtement protecteur caractérisé en ce que l'on mélange ensemble une solution du polymère fluoré préparé selon le procédé des revendications 1 ou 2 et une solution contenant un isocyanate et, ultérieurement, on évapore le solvant et on soumet le mélange à un traitement thermique.

10. L'utilisation des résines préparées selon le procédé selon la revendication 1 à 8, pour préparer des colles qui conviennent également à des basses températures.

11. L'utilisation des résines préparées selon le procédé selon la revendication 1 à 8, comme matériau structurel présentant d'excellentes caractéristiques mécaniques.

12. L'utilisation des résines préparées selon le procédé selon la revendication 1 à 8, comme film protecteur sur rubans et disque magnétiques.

13. L'utilisation des résines préparées selon le procédé selon la revendication 1 à 8, comme revêtement protecteur présentant des propriétés lubrifiantes, une faible mouillabilité et une résistance élevée aux agents atmosphériques.

**Patentansprüche**

**Patentansprüche für folgende Vertragsstaaten : BE, DE, FR, GB, NL, SE**

1. Harze, die Bindungen vom Urethan-Typ enthalten und durch die Umsetzung eines Polyisocyanats mit fluorierten Polymeren der allgemeinen Formel (I) erhältlich sind:

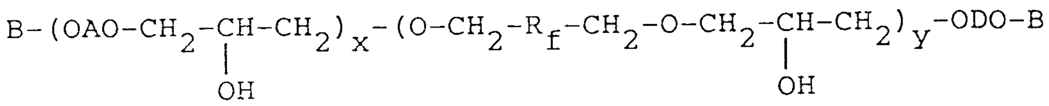 (I)

worin die Einheiten mit den Indices x und y eine statistische Verteilung oder eine Blockverteilung innerhalb des Polymers aufweisen und:

x = eine ganze Zahl bis zu 20, aber nicht 0;
y = eine ganze Zahl von 1 bis 20;
B, B' = unabhängig H oder

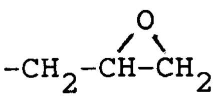

A = ein Rest eines fluorierten oder nicht-fluorierten Diols, das einen oder mehrere aromatische oder cycloaliphatische oder polycyclische Ringe enthält;
$R_f$ = ein Perfluoralkylenrest, der Sequenzen mit einem durchschnittlichen Molekulargewicht von 338 bis 7000 aus Fluoroxyalkylen-Einheiten umfaßt, die aus den folgenden Klassen ausgewählt sind:

I - $(C_2F_4O)$ und $(CF_2O)$, wobei die Einheiten statistischentlang der Fluorpolyoxyalkylen-Kette verteilt sind;
II - $(C_3F_6O)$, $(C_2F_4O)$ und (CFXO), worin X = F oder $CF_3$, wobei die Einheiten statistisch entlang der Fluorpolyoxyalkylen-Kette verteilt sind;
III - $(CH_2CF_2CF_2O)$, wobei die Einheiten in der Fluorpolyoxyalkylen-Kette wie folgt verknüpft sind:

$-(OCF_2CF_2CH_2)_p-O-R'_fO-(CH_2CF_2CF_2O)_q-$

worin $R'_f$ eine Fluoralkylengruppe ist und p und q ganze Zahlen sind, wobei p + q größer als 2 ist:
IV -

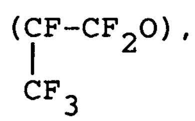

wobei die Einheiten in der Fluorpolyoxyalkylenkette wie folgt verteilt sind:

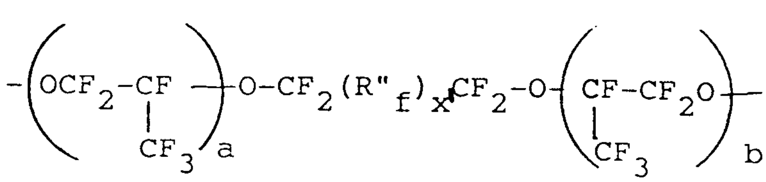

worin $R''_f$ eine Fluoralkylengruppe ist, x' 0 oder 1 ist und a und b ganze Zahlen sind, wobei a + b größer als 2 ist;
V - $(CF_2CF_2CF_2O)$;

VI - $(CF_2CF_2O)$;

D = A oder $CH_2R_fCH_2$.

**2.** Harze nach Anspruch 1, worin das Diol HOAOH aus Verbindungen der folgenden Formeln ausgewählt ist:

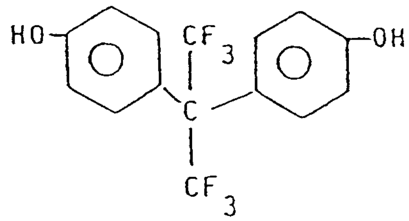

(Bisphenol (AF)

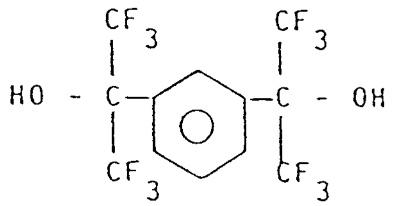

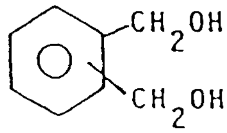

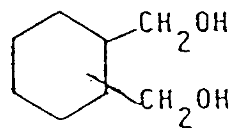

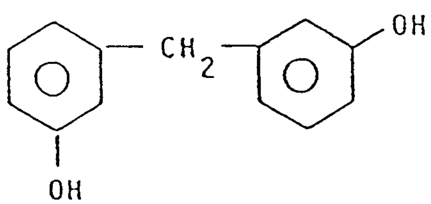

**3.** Harze nach Anspruch 1 oder 2, worin das Polyisocyanat aus fluorierten Diisocyanaten ausgewählt ist, die ein durchschnittliches Molekulargewicht von 500 bis 7000 aufweisen und durch die folgende Formel repäsentiert werden:

$OCN\text{-}R\text{-}Z\text{-}CF_2O\text{-}(C_2F_4O)_m\text{-}(CF_2O)_n\text{-}CF_2\text{-}Z\text{-}R\text{-}NCO$

worin Z eine Einfachbindung ist oder eine Gruppe des Typs: -CONH-, $-CH_2-$, $-CH_2O-$, $-CH_2OCH_2-$, -O-, $-CH_2OSO_2-$ bedeutet; R einen zweiwertigen aliphatischen Rest mit einer $C_1$-$C_{12}$ Kette oder einen cycloaliphatischen oder aromatischen Rest darstellt, und worin die Einheit $(CF_2O)$ und die Einheit $(C_2F_4O)$ statistisch entlang der Kette verteilt sind, m und n ganze Zahlen sind und das m/n-Verhältnis 0,2 bis 2, vorzugsweise 0,5 bis 1,2, beträgt.

**4.** Harze nach Anspruch 3, worin der Rest R des Polyisocyanats ausgewählt ist aus:

$-(CH_2)_6-$, 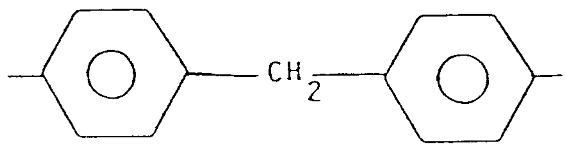 , 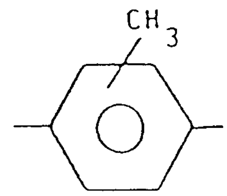

$-CH_2-$,

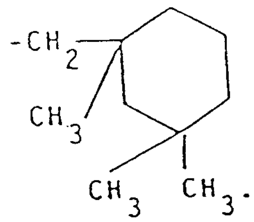 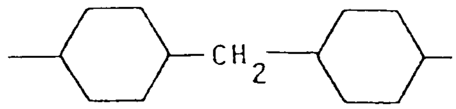

**5.** Harze nach Anspruch 1 bis 3, worin das Polyisocyanat aus Hexamethylendiisocyanat (HDI), Isophorondiisocyanat (IPDI), Toluoldiisocyanat (TDI), Methylen-bis-(4-cyclohexylisocyanat) ($H_{12}$-MDI) und Trimeren von TDI und HDI ausgewählt ist.

**6.** Harze nach irgendeinem der Ansprüche 1 bis 5, worin das OH/NCO-Äquivalenzverhältnis 0,7 bis 1,3, vorzugsweise 0,9 bis 1,1, beträgt.

**7.** Harze nach irgendeinem der Ansprüche 1 bis 6, worin die Umsetzung der fluorierten Polymere mit Polyisocyanat in einem Lösungsmittel ausgeführt wird, das aus einer 80/20 Mischung von 1,1,2-Trichlortrifluorethan und Aceton besteht.

**8.** Harze nach Anspruch 1 oder 2, worin das Verhältnis $A/R_f$ 3:1 bis 1:3 beträgt, wobei die Summe (x + y) nicht größer als 40 ist.

**9.** Verfahren zur Herstellung von Schutzüberzügen, dadurch gekennzeichnet, daß eine Lösung des fluorierten Polymers nach Anspruch 1 oder 2 und eine Lösung, die ein Isocyanat enthält, gemischt werden und danach das Lösungsmittel verdampft und die Mischung einer Wärmebehandlung unterworfen wird.

**10.** Verwendung der Harze nach Anspruch 1 bis 8 zur Herstellung von Klebstoffen, die auch für niedrige Temperaturen geeignet sind.

**11.** Verwendung der Harze nach Anspruch 1 bis 8 als Strukturmaterialien mit ausgezeichneten mechanischen Eigenschaften.

**12.** Verwendung der Harze nach Anspruch 1 bis 8 als Schutzfilme auf Magnetbändern und Disketten.

**13.** Verwendung der Harze nach Anspruch 1 bis 8 als Schutzüberzüge mit schmierenden Eigenschaften, geringer Benetzbarkeit und hoher Beständigkeit gegenüber atmosphärischen Agentien.

**Patentansprüche für folgenden Verstragsstaat : AT**

**1.** Verfahren zur Herstellung von Harzen, die Bindungen vom Urethan-Typ enthalten, welches umfaßt, daß ein Polyisocyanat mit fluorierten Polymeren der allgemeinen Formel (I) umgesetzt wird:

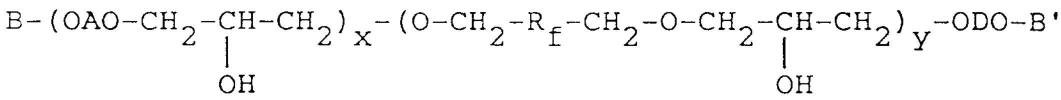 (I)

worin die Einheiten mit den Indices x und y eine statistische Verteilung oder eine Blockverteilung innerhalb des Polymers aufweisen und:

x = eine ganze Zahl bis zu 20, aber nicht 0;
y = eine ganze Zahl von 1 bis 20;
B, B' = unabhängig H oder

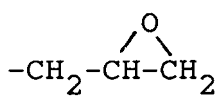

A = ein Rest eines fluorierten oder nicht-fluorierten Diols, das einen oder mehrere aromatische oder cycloaliphatische oder polycyclische Ringe enthält;
$R_f$ = ein Perfluoralkylenrest, der Sequenzen mit einem durchschnittlichen Molekulargewicht von 338 bis 7000 aus Fluoroxyalkylen-Einheiten umfaßt, die aus den folgenden Klassen ausgewählt sind:

I - ($C_2F_4O$) und ($CF_2O$), wobei die Einheiten statistisch entlang der Fluorpolyoxyalkylen-Kette verteilt sind;

II - ($C_3F_6O$), ($C_2F_4O$) und (CFXO), worin X = F oder $CF_3$, wobei die Einheiten statistisch entlang der Fluorpolyoxyalkylen-Kette verteilt sind;

III - ($CH_2CF_2CF_2O$), wobei die Einheiten in der Fluorpolyoxyalkylen-Kette wie folgt verknüpft sind:

$-(OCF_2CF_2CH_2)_p-O-R'_fO-(CH_2CF_2CF_2O)_q-$

worin $R'_f$ eine Fluoralkylengruppe ist und p und q ganze Zahlen sind, wobei p + q größer als 2 ist:

IV -

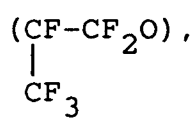

wobei die Einheiten in der Fluorpolyoxyalkylenkette wie folgt verteilt sind:

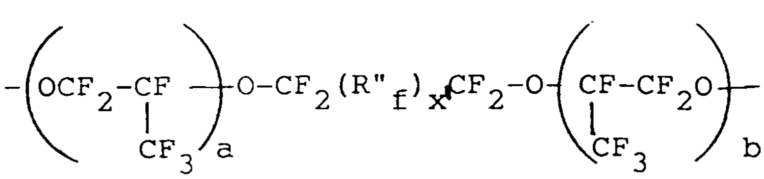

worin $R''_f$ eine Fluoralkylengruppe ist, x' 0 oder 1 ist und a und b ganze Zahlen sind, wobei a + b größer als 2 ist;

V - ($CF_2CF_2CF_2O$);

VI - $(CF_2CF_2O)$;

D = A oder $CH_2R_fCH_2$.

**2.** Verfahren nach Anspruch 1, worin das Diol HOAOH aus Verbindungen der folgenden Formeln ausgewählt ist:

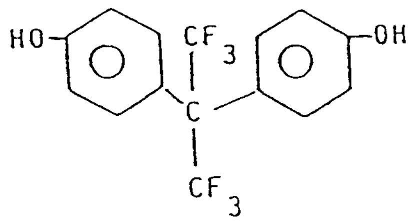

(.Bisphenol (AF)

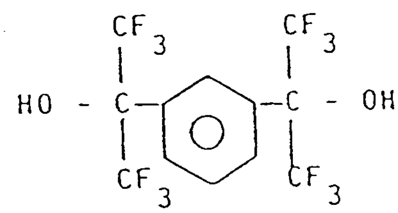

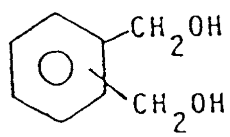

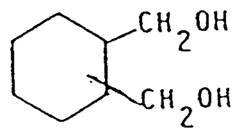

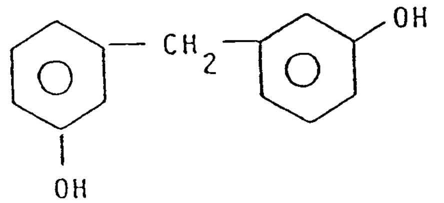

**3.** Verfahren nach Anspruch 1 oder 2, worin das Polyisocyanat aus fluorierten Diisocyanaten ausgewählt ist, die ein durchschnittliches Molekulargewicht von 500 bis 7000 aufweisen und durch die folgende Formel repräsentiert werden:

$OCN\text{-}R\text{-}Z\text{-}CF_2O\text{-}(C_2F_4O)_m\text{-}(CF_2O)_n\text{-}CF_2\text{-}Z\text{-}R\text{-}NCO$

worin Z eine Einfachbindung ist oder eine Gruppe des Typs: -CONH-, $-CH_2-$, $-CH_2O-$, $-CH_2OCH_2-$, -O-, $-CH_2OSO_2-$ bedeutet; R einen zweiwertigen aliphatischen Rest mit einer $C_1$-$C_{12}$ Kette oder einen cycloaliphatischen oder aromatischen Rest darstellt, und worin die Einheit $(CF_2O)$ und die Einheit $(C_2F_4O)$ statistisch entlang der Kette verteilt sind, m und n ganze Zahlen sind und das m/n-Verhältnis 0,2 bis 2, vorzugsweise 0,5 bis 1,2, beträgt.

4. Verfahren nach Anspruch 3, worin der Rest R des Polyisocyanats ausgewählt ist aus:

$-(CH_2)_6-$,

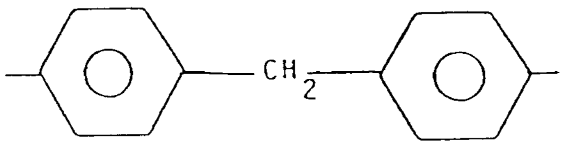

,

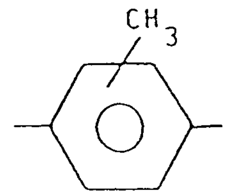

$-CH_2-$,

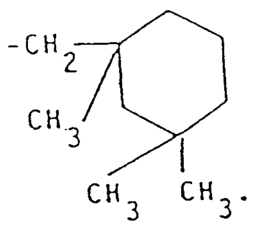

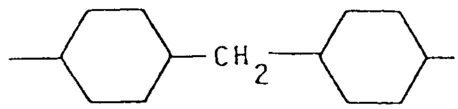

5. Verfahren nach Anspruch 1 bis 3, worin das Polyisocyanat aus Hexamethylendiisocyanat (HDI), Isophorondiisocyanat (IPDI), Toluoldiisocyanat (TDI), Methylen-bis-(4-cyclohexylisocyanat) ($H_{12}$-MDI) und Trimeren von TDI und HDI ausgewählt ist.

6. Verfahren nach irgendeinem der Ansprüche 1 bis 5, worin das OH/NCO-Äquivalenzverhältnis 0,7 bis 1,3, vorzugsweise 0,9 bis 1,1, beträgt.

7. Verfahren nach irgendeinem der Ansprüche 1 bis 6, worin die fluorierten Polymere mit einem Polyisocyanat in einem Lösungsmittel umgesetzt werden, das aus einer 80/20 Mischung von 1,1,2-Trichlortrifluorethan und Aceton besteht.

8. Verfahren nach Anspruch 1 oder 2, worin das Verhältnis $A/R_f$ 3:1 bis 1:3 beträgt, wobei die Summe (x + y) nicht größer als 40 ist.

9. Verfahren zur Herstellung von Schutzüberzügen, dadurch gekennzeichnet, daß eine Lösung des nach Anspruch 1 oder 2 hergestellten fluorierten Polymers und eine Lösung, die ein Isocyanat enthält, gemischt werden und danach das Lösungsmittel verdampft und die Mischung einer Wärmebehandlung unterworfen wird.

10. Verwendung der Harze nach Anspruch 1 bis 8 zur Herstellung von Klebstoffen, die auch für niedrige Temperaturen geeignet sind.

11. Verwendung der Harze nach Anspruch 1 bis 8 als Strukturmaterialien mit ausgezeichneten mechanischen Eigenschaften.

12. Verwendung der Harze nach Anspruch 1 bis 8 als Schutzfilme auf Magnetbändern und Disketten.

13. Verwendung der Harze nach Anspruch 1 bis 8 als Schutzüberzüge mit schmierenden Eigenschaften, geringer Benetzbarkeit und hoher Beständigkeit gegenüber atmosphärischen Agentien.